(19) Europäisches Patentamt
European Patent Office
Office européen des brevets

(11) **EP 4 030 357 A1**

(12) **EUROPEAN PATENT APPLICATION**

(43) Date of publication:
**20.07.2022 Bulletin 2022/29**

(21) Application number: **21208180.6**

(22) Date of filing: **15.11.2021**

(51) International Patent Classification (IPC):
**G06N 10/60** $^{(2022.01)}$    **G06F 17/10** $^{(2006.01)}$

(52) Cooperative Patent Classification (CPC):
**G06F 17/10; G06N 10/60**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.01.2021 JP 2021004448**

(71) Applicant: **FUJITSU LIMITED**
**Kawasaki-shi, Kanagawa 211-8588 (JP)**

(72) Inventors:
• **Yamaguchi, Jumpei**
  **Kawasaki-shi, Kanaga, 211-8588 (JP)**
• **Izu, Tetsuya**
  **Kawasaki-shi, Kanaga, 211-8588 (JP)**
• **Akiyama, Takashige**
  **Kawasaki-shi, Kanaga, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57)    A computer-implemented method includes: acquiring an evaluation function represented by a product of high-degree polynomials; generating a quadratic polynomial equivalent to the evaluation function by applying a degree reduction one or more times to each of the high-degree polynomials that represent the acquired evaluation function without expanding the evaluation function; and performing annealing calculation on the generated quadratic polynomial.

FIG. 1

**Description**

FIELD

The embodiment discussed herein is related to an information processing program, an information processing method, and an information processing device.

BACKGROUND

In the past, there has been an approach called annealing calculation for working out an optimum solution of a combination problem. The optimum solution is, for example, the minimum value. In this approach, the minimum value of a target evaluation function is worked out by transitioning an evaluation function whose minimum value is known to the target evaluation function for which the minimum value is to be worked out. The target evaluation function is, for example, the Hamiltonian. In this approach, a search is stochastically performed in order to work out the minimum value except the local minimal value.

In an example of prior art, each integer variable of a polynomial is rewritten into a first-degree function with a binary variable. Furthermore, for example, there is a technique of setting high-order energy that is a four or higher-degree polynomial, using a binary variable corresponding to a binary label allocated to each pixel of image data. In addition, for example, there is a technique of registering information indicating which arithmetic algorithm the arithmetic program is to follow in relation to the degree of a polynomial when used to be advantageous in shortening the arithmetic time of polynomial multiplication. Besides, for example, there is a technique of recalculating each integer variable as a linear function with a binary variable, replacing the recalculated each integer variable with an equivalent binary representation, and executing a degree reduction on the equivalent binary representation.

Examples of the related art include as follows: Japanese National Publication of International Patent Application No. 2019-526090; Japanese Laid-open Patent Publication No. 2012-27755; Japanese Laid-open Patent Publication No. 2000-298665; and U.S. Patent Application Publication No. 2017/0344898.

SUMMARY

[TECHNICAL PROBLEM]

However, with the past techniques, it is difficult to efficiently perform the annealing calculation. For example, when the target evaluation function is cubic or of a higher degree, it is supposed that the target evaluation function is transformed into a quadratic format, and then the annealing calculation is performed. However, the greater the number of variables contained in the target evaluation function after the transformation, the less efficient the annealing calculation tends to be.

In one aspect, the present embodiment aims to improve the efficiency of the annealing calculation.

[SOLUTION TO PROBLEM]

According to an aspect of the embodiments, a computer-implemented method includes: acquiring an evaluation function represented by a product of high-degree polynomials; generating a quadratic polynomial equivalent to the evaluation function by applying a degree reduction one or more times to each of the high-degree polynomials that represent the acquired evaluation function without expanding the evaluation function; and performing annealing calculation on the generated quadratic polynomial.

[ADVANTAGEOUS EFFECTS OF INVENTION]

According to one mode, it becomes possible to improve the efficiency of the annealing calculation.

BRIEF DESCRIPTION OF DRAWINGS

FIG. 1 is an explanatory diagram illustrating an example of an information processing method according to an embodiment;
FIG. 2 is an explanatory diagram illustrating an example of an information processing system 200;
FIG. 3 is a block diagram illustrating a hardware configuration example of an information processing device 100;

FIG. 4 is a block diagram illustrating a functional configuration example of the information processing device 100;

FIG. 5 is an explanatory diagram illustrating a flow of an action of the information processing device 100;

FIG. 6 is an explanatory diagram (part 1) illustrating a first action example of the information processing device 100;

FIG. 7 is an explanatory diagram (part 2) illustrating a first action example of the information processing device 100;

FIG. 8 is an explanatory diagram illustrating a second action example of the information processing device 100;

FIG. 9 is an explanatory diagram illustrating a usage example of the information processing device 100; and

FIG. 10 is a flowchart illustrating an example of an overall processing procedure.

DESCRIPTION OF EMBODIMENTS

Hereinafter, embodiments of an information processing program, an information processing method, and an information processing device will be described in detail with reference to the drawings.

(Example of Information Processing Method According to Embodiment)

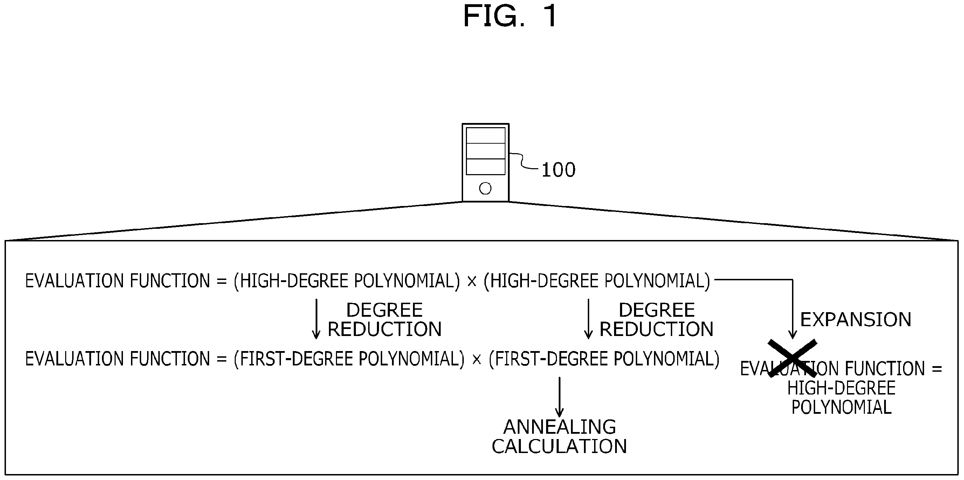

FIG. 1 is an explanatory diagram illustrating an example of an information processing method according to an embodiment. The information processing device 100 is a computer for generating a quadratic polynomial equivalent to an evaluation function.

The evaluation function is a high-degree polynomial. The evaluation function is represented by, for example, the product of high-degree polynomials. The evaluation function is employed as a target of the annealing calculation. The evaluation function is, for example, the Hamiltonian. For example, the information processing device 100 is a server, a personal computer (PC), or the like.

It is desirable that the target of the annealing calculation be a quadratic polynomial. Therefore, when the evaluation function is cubic or of a higher degree, the evaluation function is supposed to be converted into a quadratic polynomial by applying a degree reduction one or more times to the evaluation function. As an approach of applying the degree reduction, for example, an approach called higher order binary optimization (HOBO) 2 quadratic unconstrained binary optimization (QUBO) is conceivable.

Every time the degree reduction is applied, the number of variables contained in the finally converted quadratic polynomial increments by one. The number of variables denotes, for example, the number of variables in a case where variables different from each other are counted. The number of variables does not denote, for example, the number of variables in a case where the identical variables are counted separately when the identical variables appear a plurality of times.

Here, the smaller the number of variables contained in the converted quadratic polynomial, the more efficiently the annealing calculation tends to be allowed to be performed. However, in the past, it has been difficult to efficiently perform the annealing calculation. For example, in the past, the number of variables contained in the transformed quadratic polynomial has been prone to increase, and the efficiency of the annealing calculation has been prone to deteriorate.

For example, an approach 1 of converting the evaluation function into a quadratic polynomial by applying a degree reduction one or more times to each of cubic or higher-degree terms in the evaluation function in order from the beginning is conceivable. For example, in the approach 1, if the evaluation function is H = acd + bcd, the evaluation function is converted into a quadratic polynomial by applying a degree reduction to ac of the cubic or higher-degree term acd and applying a degree reduction to bc of the cubic or higher-degree term bcd in the evaluation function. In the approach 1, the number of variables contained in the quadratic polynomial is prone to increase, and the efficiency of the annealing calculation is prone to deteriorate.

Furthermore, for example, an approach 2 of converting the evaluation function into a quadratic polynomial by specifying a common term in the evaluation function and applying a degree reduction to the common term is conceivable. For example, in the approach 2, if the evaluation function is H = acd + bcd, the evaluation function is converted into a quadratic polynomial by specifying a common term cd, converting the evaluation function into H = cd(a + b), and applying a degree reduction to cd. In the approach 2, the number of variables contained in the quadratic polynomial is prone to increase, and the efficiency of the annealing calculation is prone to deteriorate.

Thus, in the present embodiment, a description will be made of an information processing method that may achieve a decrease in the number of variables contained in a quadratic polynomial obtained by applying a degree reduction one or more times to an evaluation function and may improve the efficiency of annealing calculation.

In FIG. 1, (1-1) an information processing device 100 acquires an evaluation function represented by the product of high-degree polynomials. Here, the evaluation function is not expanded. The evaluation function is, for example, (first-degree polynomial) × (high-degree polynomial). The evaluation function is, for example, (high-degree polynomial) × (high-degree polynomial). For example, the evaluation function is (a + b + 1) × (cd - 2) or the like. The information processing device 100 acquires the evaluation function by accepting the input of the evaluation function based on an operation input by a user, for example.

(1-2) The information processing device 100 applies a degree reduction one or more times to each of high-degree polynomials representing the acquired evaluation function without expanding the evaluation function, thereby generating a quadratic polynomial equivalent to the evaluation function. For example, the information processing device 100 applies a degree reduction one or more times to each of the high-degree polynomials representing the evaluation function and converts each of the high-degree polynomials into a first-degree polynomial. This allows the information processing device 100 to generate a quadratic polynomial = (first-degree polynomial) $\times$ (first-degree polynomial) equivalent to the evaluation function. At this time, since the information processing device 100 applies the degree reduction one or more times to each of the high-degree polynomials representing the evaluation function without expanding the evaluation function, a decrease in the number of variables contained in the generated quadratic polynomial may be achieved.

(1-3) The information processing device 100 performs the annealing calculation on the generated quadratic polynomial. This allows the information processing device 100 to efficiently perform the annealing calculation. Since a relatively small number of variables are contained in the quadratic polynomial, for example, the information processing device 100 may perform the annealing calculation efficiently when performing the annealing calculation on the quadratic polynomial.

Here, a case where the information processing device 100 makes actions independently has been described. However, the information processing device 100 is not limited to this case. For example, there may be a case where the information processing device 100 cooperates with another computer. For example, there may be a case where the information processing device 100 acquires the evaluation function by receiving the evaluation function from another computer. In this case, the information processing device 100 generates a quadratic polynomial equivalent to the evaluation function and transmits the result of performing the annealing calculation to the other computer.

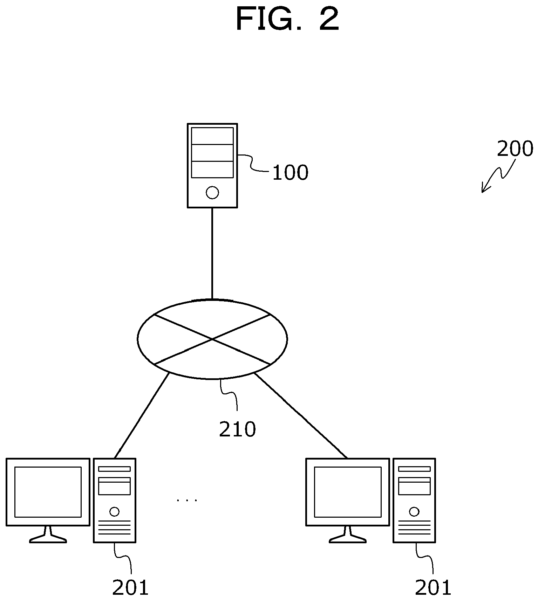

Furthermore, for example, there may be a case where the information processing device 100 acquires the evaluation function by receiving the evaluation function from another computer capable of performing the annealing calculation. In this case, the information processing device 100 generates a quadratic polynomial equivalent to the evaluation function and transmits the generated quadratic polynomial to the other computer capable of performing the annealing calculation. An example of an information processing system 200 including the information processing device 100 and another computer in this case will be described later precisely with reference to FIG. 2.

(Example of Information Processing System 200)

Next, an example of the information processing system 200 to which the information processing device 100 illustrated in FIG. 1 is applied will be described with reference to FIG. 2.

FIG. 2 is an explanatory diagram illustrating an example of the information processing system 200. In FIG. 2, the information processing system 200 includes the information processing device 100 and one or more client devices 201.

In the information processing system 200, the information processing device 100 and the client devices 201 are connected via a wired or wireless network 210. For example, the network 210 is a local area network (LAN), a wide area network (WAN), the Internet, or the like.

The information processing device 100 receives the evaluation function from the client device 201. The information processing device 100 applies a degree reduction one or more times to each of high-degree polynomials representing the received evaluation function without expanding the evaluation function, thereby generating a quadratic polynomial equivalent to the evaluation function. The information processing device 100 transmits the generated quadratic polynomial to the client device 201.

The client device 201 acquires the evaluation function as a target to be subjected to the annealing calculation, based on an operation input by a user. The client device 201 receives the quadratic polynomial equivalent to the evaluation function from the information processing device 100. The client device 201 performs the annealing calculation on the quadratic polynomial. The client device 201 outputs the result of performing the annealing calculation in a manner that allows the user to refer to the result. For example, the client device 201 is a server, a PC, or the like.

(Hardware Configuration Example of Information Processing Device 100)

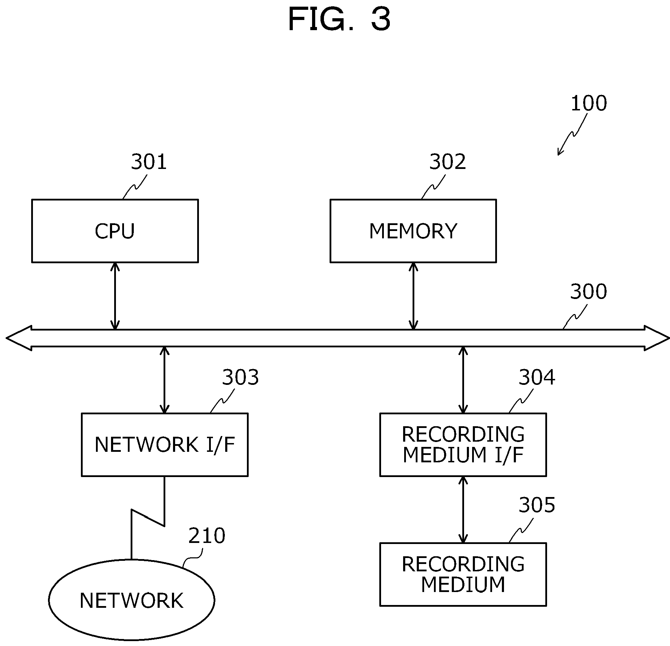

Next, a hardware configuration example of the information processing device 100 will be described with reference to FIG. 3.

FIG. 3 is a block diagram illustrating a hardware configuration example of the information processing device 100. In FIG. 3, the information processing device 100 includes a central processing unit (CPU) 301, a memory 302, a network interface (I/F) 303, a recording medium I/F 304, and a recording medium 305. Furthermore, the individual components are connected to each other by a bus 300.

Here, the CPU 301 is in charge of overall control of the information processing device 100. For example, the memory 302 includes a read only memory (ROM), a random access memory (RAM), a flash ROM, and the like. Precisely, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is connected to the network 210 through a communication line and is connected to another computer via the network 210. Then, the network I/F 303 is in charge of an interface between the network 210 and the inside and controls input and output of data to and from another computer. For example, the network I/F 303 is a modem, a LAN adapter, or the like.

The recording medium I/F 304 controls reading and writing of data from and to the recording medium 305 under the control of the CPU 301. For example, the recording medium I/F 304 is a disk drive, a solid state drive (SSD), a universal serial bus (USB) port, or the like. The recording medium 305 is a nonvolatile memory that stores data written under the control of the recording medium I/F 304. For example, the recording medium 305 is a disk, a semiconductor memory, a USB memory, or the like. The recording medium 305 may be attachable to and detachable from the information processing device 100.

For example, the information processing device 100 may include a keyboard, a mouse, a display, a printer, a scanner, a microphone, a speaker, or the like in addition to the components described above. Furthermore, the information processing device 100 may include a plurality of the recording medium I/Fs 304 and the recording media 305. In addition, the information processing device 100 does not need to include the recording medium I/F 304 and the recording medium 305.

(Hardware Configuration Example of Client Device 201)

Precisely, since the hardware configuration example of the client device 201 is similar to the hardware configuration example of the information processing device 100 illustrated in FIG. 3, the description thereof will be omitted.

(Functional Configuration Example of Information Processing Device 100)

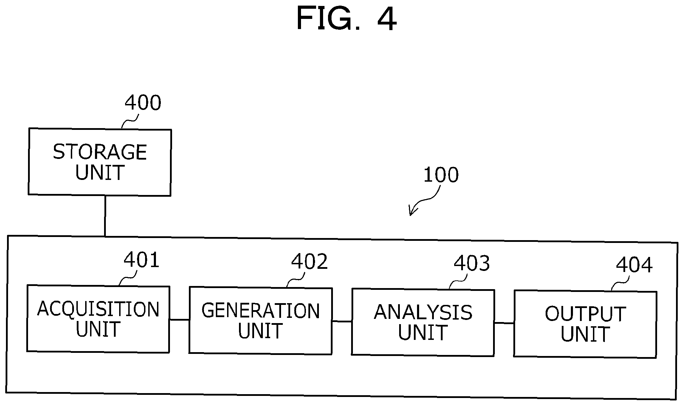

Next, a functional configuration example of the information processing device 100 will be described with reference to FIG. 4.

FIG. 4 is a block diagram illustrating a functional configuration example of the information processing device 100. The information processing device 100 includes a storage unit 400, an acquisition unit 401, a generation unit 402, an analysis unit 403, and an output unit 404.

The storage unit 400 is implemented by a storage area of the memory 302, the recording medium 305, or the like illustrated in FIG. 3, for example. Hereinafter, a case where the storage unit 400 is included in the information processing device 100 will be described. However, the storage unit 400 is not limited to this case. For example, there may be a case where the storage unit 400 is included in a device different from the information processing device 100, and the information processing device 100 is allowed to refer to the stored contents of the storage unit 400.

The acquisition unit 401 to the output unit 404 function as an example of a control unit. Precisely, for example, the acquisition unit 401 to the output unit 404 implement functions thereof by causing the CPU 301 to execute a program stored in the storage area of the memory 302, the recording medium 305, or the like or by the network I/F 303 illustrated in FIG. 3. A processing result of each functional unit is stored in the storage area of the memory 302, the recording medium 305, or the like illustrated in FIG. 3, for example.

The storage unit 400 stores various sorts of information to be referred to or updated in the processing of each functional unit. The storage unit 400 stores, for example, the evaluation function. The evaluation function is a high-degree polynomial. The evaluation function is unarranged. Being unarranged means not being expanded. Being unarranged means, for example, that at least one of multiplication points including the high-degree polynomial in the evaluation function is not expanded. The evaluation function is represented by, for example, the product of high-degree polynomials. For example, the evaluation function is represented by the product of a first-degree polynomial and a high-degree polynomial in some cases. For example, the evaluation function is represented by the product of a first high-degree polynomial and a second high-degree polynomial in some cases. The evaluation function is employed as a target of the annealing calculation. The evaluation function is, for example, the Hamiltonian. The Hamiltonian represents energy in a certain system.

The acquisition unit 401 acquires various sorts of information to be used for the processing of each functional unit. The acquisition unit 401 stores the acquired various sorts of information in the storage unit 400 or outputs the acquired various sorts of information to each functional unit. Furthermore, the acquisition unit 401 may output the various sorts of information stored in the storage unit 400 to each functional unit. The acquisition unit 401 acquires the various sorts of information based on, for example, an operation input by a user. The acquisition unit 401 may receive the various sorts of information from a device different from the information processing device 100, for example.

The acquisition unit 401 acquires, for example, the evaluation function. For example, the acquisition unit 401 acquires the evaluation function by accepting the input of the evaluation function based on an operation input by the user. For example, the acquisition unit 401 acquires the evaluation function by receiving the evaluation function from the client device 201. For example, the acquisition unit 401 acquires the evaluation function by reading the evaluation function from the attachable/detachable recording medium 305.

The acquisition unit 401 may accept a start trigger to start the processing of any one of the functional units. The start trigger is, for example, a predetermined operation input made by the user. The start trigger may be, for example, the receipt of predetermined information from another computer. The start trigger may be, for example, the output of predetermined information by any one of the functional units. The acquisition unit 401 accepts, for example, the acquisition of the evaluation function as a start trigger to start the processing of the generation unit 402 and the analysis unit 403.

The generation unit 402 generates a quadratic polynomial equivalent to the evaluation function. For example, the generation unit 402 applies a degree reduction one or more times to each of high-degree polynomials representing the acquired evaluation function without expanding the evaluation function, thereby generating a quadratic polynomial equivalent to the evaluation function.

For example, a case where the evaluation function is represented by the product of a first-degree polynomial and a high-degree polynomial is conceivable. In this case, for example, the generation unit 402 generates a quadratic polynomial equivalent to the evaluation function using the product of the first-degree polynomial representing the evaluation function and a first-degree polynomial obtained by applying a degree reduction one or more times to the high-degree polynomial representing the evaluation function.

More precisely, the generation unit 402 adds a penalty term to the product of the first-degree polynomial representing the evaluation function and a first-degree polynomial obtained by applying a degree reduction one or more times to the high-degree polynomial representing the evaluation function to generate a quadratic polynomial equivalent to the evaluation function. The penalty term is a term that is added to the evaluation function at the time of the degree reduction in order to ensure the identity of the evaluation function between before and after the application of the degree reduction. This allows the generation unit 402 to generate a quadratic polynomial equivalent to the evaluation function such that the number of variables contained in the quadratic polynomial to be generated becomes relatively small.

Furthermore, for example, a case where the evaluation function is represented by the product of the first high-degree polynomial and the second high-degree polynomial is conceivable. In this case, for example, the generation unit 402 applies a degree reduction one or more times to the first high-degree polynomial to generate a first first-degree polynomial. In addition, for example, the generation unit 402 applies a degree reduction one or more times to the second high-degree polynomial to generate a second first-degree polynomial. Then, for example, the generation unit 402 generates a quadratic polynomial equivalent to the evaluation function using the product of the first first-degree polynomial and the second first-degree polynomial.

More precisely, the generation unit 402 adds the penalty term to the product of the first first-degree polynomial and the second first-degree polynomial to generate a quadratic polynomial equivalent to the evaluation function. This allows the generation unit 402 to generate a quadratic polynomial equivalent to the evaluation function such that the number of variables contained in the quadratic polynomial to be generated becomes relatively small.

In this case, when generating a quadratic polynomial equivalent to the evaluation function, the generation unit 402 uses the same variable to apply a degree reduction to a part common to the first high-degree polynomial and the second high-degree polynomial. This allows the generation unit 402 to generate a quadratic polynomial equivalent to the evaluation function such that the number of variables contained in the quadratic polynomial to be generated further becomes smaller.

For example, the generation unit 402 determines whether to generate a quadratic polynomial equivalent to the evaluation function without expanding the evaluation function or to generate a quadratic polynomial equivalent to the evaluation function after expanding the evaluation function. For example, the generation unit 402 specifies a first number of times the degree reduction is applied when applying the degree reduction one or more times without expanding the evaluation function to generate a quadratic polynomial equivalent to the evaluation function. Furthermore, for example, the generation unit 402 specifies a second number of times the degree reduction is applied when applying the degree reduction one or more times after expanding the evaluation function to generate a quadratic polynomial equivalent to the evaluation function.

Then, for example, the generation unit 402 compares the first number of times and the second number of times. Here, for example, as a result of the comparison, if the first number of times is equal to or less than the second number of times, the generation unit 402 generates a quadratic polynomial equivalent to the evaluation function by applying a degree reduction one or more times to each of the high-degree polynomials representing the evaluation function without expanding the evaluation function. This allows the generation unit 402 to generate a quadratic polynomial equivalent to the evaluation function based on the first number of times and the second number of times such that the number of variables contained in the quadratic polynomial to be generated becomes relatively small.

As a result of the comparison, if the first number of times is greater than the second number of times, the generation unit 402 generates a quadratic polynomial equivalent to the evaluation function by applying a degree reduction one or more times after expanding the evaluation function. This allows the generation unit 402 to generate a quadratic polynomial equivalent to the evaluation function based on the first number of times and the second number of times such that the number of variables contained in the quadratic polynomial to be generated becomes relatively small.

The analysis unit 403 performs the annealing calculation on the generated quadratic polynomial. This allows the analysis unit 403 to efficiently perform the annealing calculation. Since a relatively small number of variables are contained in the quadratic polynomial, for example, the analysis unit 403 may perform the annealing calculation efficiently when performing the annealing calculation on the quadratic polynomial.

The output unit 404 outputs a processing result of at least any one of the functional units. An output format is, for example, display on a display, print output to a printer, transmission to an external device by the network I/F 303, or storage in the storage area of the memory 302, the recording medium 305, or the like. This allows the output unit 404 to notify the user of the processing result of at least any one of the functional units, and the enhancement of convenience of the information processing device 100 may be achieved.

The output unit 404 outputs, for example, a quadratic polynomial equivalent to the evaluation function. For example, the output unit 404 outputs a quadratic polynomial equivalent to the evaluation function in a manner that allows the user to refer to the quadratic polynomial. This allows the output unit 404 to make it possible for the user to efficiently perform the annealing calculation. For example, the output unit 404 transmits the quadratic polynomial equivalent to the evaluation function to an external computer. The external computer is, for example, the client device 201. This allows the output unit 404 to make it possible to efficiently perform the annealing calculation on the external computer.

The output unit 404 outputs, for example, the result of performing the annealing calculation on the quadratic polynomial. For example, the output unit 404 outputs the result of performing the annealing calculation on the quadratic polynomial in a manner that allows the user to refer to the result. This allows the output unit 404 to make the result of performing the annealing calculation on the quadratic polynomial available to the user. For example, the output unit 404 transmits the result of performing the annealing calculation on the quadratic polynomial to an external computer. This allows the output unit 404 to make the result of performing the annealing calculation on the quadratic polynomial available on the external computer.

Here, a case where the information processing device 100 includes the analysis unit 403 has been described. However, the information processing device 100 is not limited to this case. For example, there may be a case where the information processing device 100 does not make actions independently and is able to communicate with the client device 201 capable of performing the annealing calculation instead of including the analysis unit 403. In this case, the client device 201 is supposed to include the analysis unit 403.

In the following, a case where the information processing device 100 makes actions independently as illustrated in FIG. 1 will be described.

(Flow of Action of Information Processing Device 100)

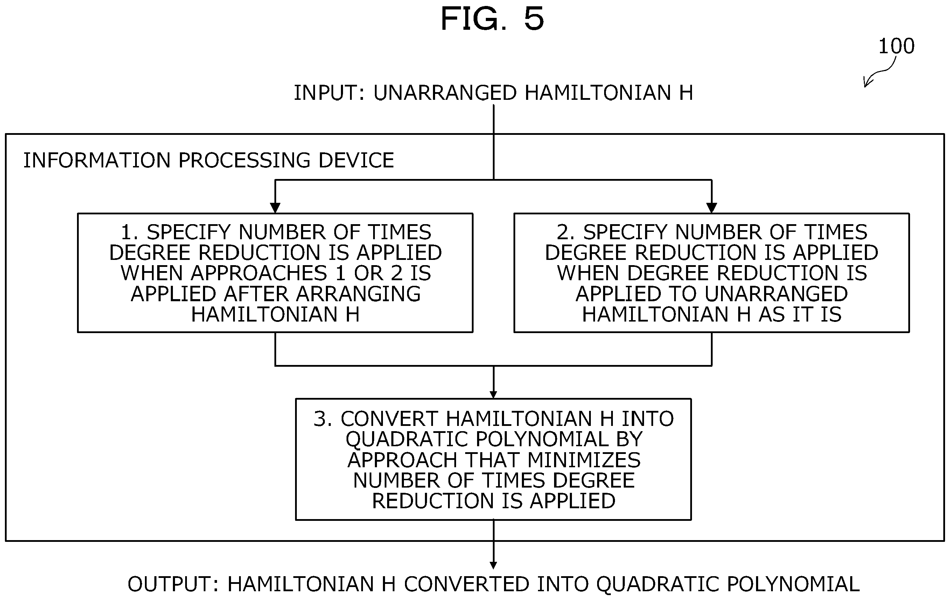

Next, a flow of an action of the information processing device 100 will be described with reference to FIG. 5.

FIG. 5 is an explanatory diagram illustrating a flow of an action of the information processing device 100. In FIG. 5, the information processing device 100 accepts the input of an unarranged Hamiltonian H, based on an operation input by the user. Being unarranged means not being expanded. The information processing device 100 can perform approaches 1 and 2 of arranging the Hamiltonian H and then converting the Hamiltonian H after the arrangement into a quadratic polynomial.

For example, the approach 1 converts the Hamiltonian H into a quadratic polynomial by applying a degree reduction one or more times to each of cubic or higher-degree terms in the Hamiltonian H in order from the beginning. In addition, for example, the approach 2 converts the Hamiltonian H into a quadratic polynomial by specifying a common term in the Hamiltonian H and applying a degree reduction to the common term.

Furthermore, the information processing device 100 can perform an approach 3 of converting the Hamiltonian H into a quadratic polynomial without arranging the Hamiltonian H. For example, the approach 3 converts the Hamiltonian H into a quadratic polynomial by applying a degree reduction one or more times to each of high-degree polynomials representing the Hamiltonian H without arranging the Hamiltonian H.

(5-1) By the approach 1, the information processing device 100 arranges the Hamiltonian H and specifies a number of times $\alpha$ the degree reduction is applied to the Hamiltonian H after the arrangement when converting the Hamiltonian H after the arrangement into a quadratic polynomial. For example, the information processing device 100 arranges the Hamiltonian H and specifies the number of times $\alpha$ the degree reduction is applied to the Hamiltonian H after the arrangement by performing the approach 1.

Furthermore, by the approach 2, the information processing device 100 arranges the Hamiltonian H and specifies a number of times β the degree reduction is applied to the Hamiltonian H after the arrangement when converting the Hamiltonian H after the arrangement into a quadratic polynomial. For example, the information processing device 100 arranges the Hamiltonian H and specifies the number of times β the degree reduction is applied to the Hamiltonian H after the arrangement by performing the approach 2. This allows the information processing device 100 to obtain a guideline for evaluating how great the number of variables contained in the quadratic polynomial generated by each of the approaches 1 and 2 is to be. For example, the information processing device 100 can obtain a guideline for evaluating how good the efficiency of the annealing calculation is to be when the annealing calculation is performed on the quadratic polynomial generated by each of the approaches 1 and 2.

(5-2) By the approach 3, the information processing device 100 specifies a number of times γ the degree reduction is applied to the Hamiltonian H when converting the Hamiltonian H into a quadratic polynomial without arranging the Hamiltonian H. For example, the information processing device 100 specifies the number of times γ the degree reduction is applied to the Hamiltonian H by performing the approach 3 without arranging the Hamiltonian. This allows the information processing device 100 to obtain a guideline for evaluating how great the number of variables contained in the quadratic polynomial generated by converting the Hamiltonian H without arranging the Hamiltonian H is to be. For example, the information processing device 100 can obtain a guideline for evaluating how good the efficiency of the annealing calculation is to be when the annealing calculation is performed on the quadratic polynomial generated by converting the Hamiltonian H without arranging the Hamiltonian H.

(5-3) The information processing device 100 acquires a quadratic polynomial when the Hamiltonian H is converted into a quadratic polynomial by an approach corresponding to the minimum number of times among the specified number of times a, number of times β, and number of times γ. This allows the information processing device 100 to convert the Hamiltonian H into a quadratic polynomial by a relatively appropriate approach among different approaches such that the annealing calculation can be performed efficiently. Therefore, the information processing device 100 can improve the efficiency of the annealing calculation.

(First Action Example of Information Processing Device 100)

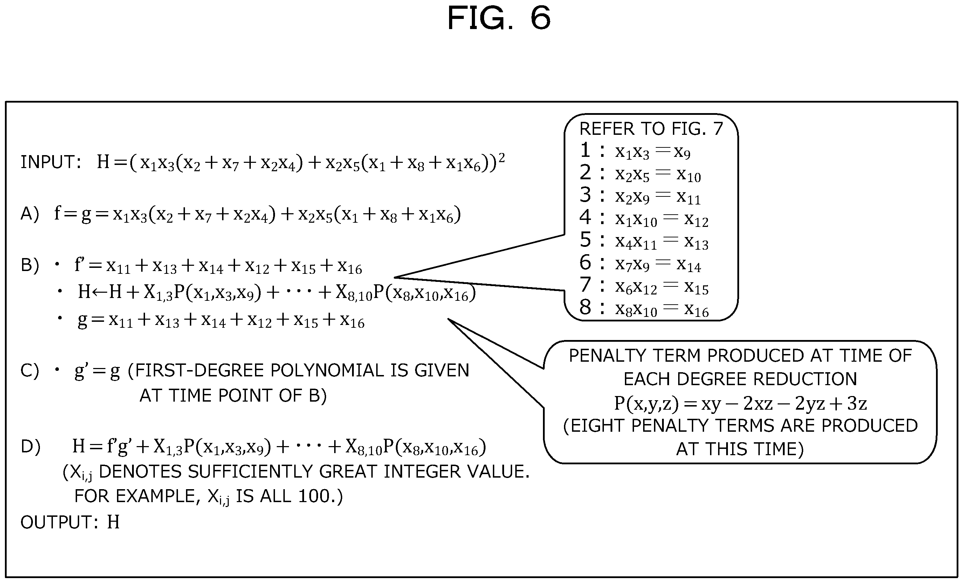

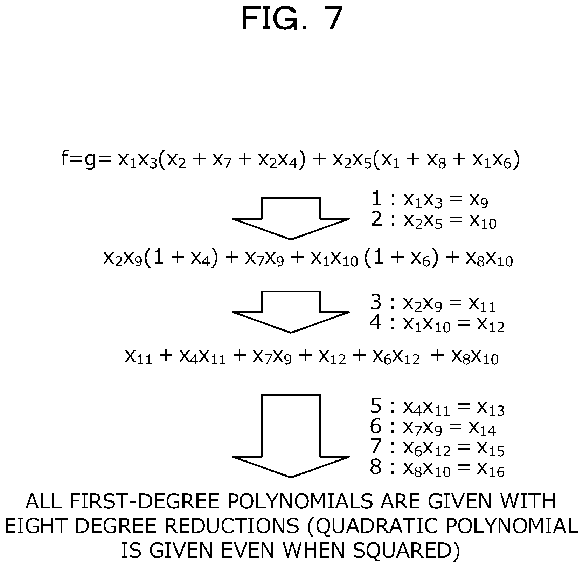

Next, a first action example of the information processing device 100 will be described with reference to FIGs. 6 and 7. The first action example is an action example indicating how the information processing device 100 converts the Hamiltonian H into a quadratic polynomial by the above approach 3 when the Hamiltonian H is represented by the square of a certain high-degree polynomial.

FIGs. 6 and 7 are explanatory diagrams illustrating the first action example of the information processing device 100. In FIG. 6, the information processing device 100 accepts the input of $H = (x_1x_3(x_2 + x_7 + x_2x_4) + x_2x_5(x_1 + x_8 + x_1x_6))^2$.

(6-A) The information processing device 100 extracts unarranged parts f and g of H. The unarranged part is a high-degree polynomial. The unarranged part is, for example, a high-degree polynomial that is defined in parentheses and to be multiplied by another polynomial. The information processing device 100 extracts, for example, $f = g = x_1x_3(x_2 + x_7 + x_2x_4) + x_2x_5(x_1 + x_8 + x_1x_6)$.

(6-B) If f is a high-degree polynomial, the information processing device 100 applies a degree reduction one or more times to f to generate a first-degree polynomial f'. For example, the information processing device 100 applies a degree reduction one or more times to f to generate a first-degree polynomial $f' = x_{11} + x_{13} + x_{14} + x_{12} + x_{15} + x_{16}$. A specific example in which the information processing device 100 generates the first-degree polynomial f' will be described later with reference to FIG. 7.

The information processing device 100 adds a penalty term produced by the degree reduction to H. The information processing device 100 sets, for example, $H \leftarrow H + X_{1,3}P(x_1, x_3, x_9) + ... + X_{8,10}P(x_8, x_{10}, x_{16})$. In the example in FIG. 6, eight penalty terms are produced.

When applying the degree reduction to f using a certain variable, the information processing device 100 applies the degree reduction also to g using the same variable if the degree reduction can be applied to g using the same variable similarly to f. Therefore, the information processing device 100 is deemed to have already converted g into the first-degree polynomial $g = x_{11} + x_{13} + x_{14} + x_{12} + x_{15} + x_{16}$.

(6-C) If g is a high-degree polynomial, the information processing device 100 applies a degree reduction one or more times to g to generate a first-degree polynomial g'. Since g is already a first-degree polynomial, the information processing device 100 sets $g' = g = x_{11} + x_{13} + x_{14} + x_{12} + x_{15} + x_{16}$.

(6-D) The information processing device 100 converts H into a quadratic polynomial by replacing f and g in H with f' and g'. The information processing device 100 generates, for example, $H = f'g' + X_{1,3}P(x_1, x_3, x_9) + ... + X_{8,10}P(x_8, x_{10}, x_{16})$. $X_{(i,j)}$ denotes a relatively great integer value. $X_{(i,j)}$ is, for example, all 100.

The information processing device 100 outputs H. The information processing device 100 outputs H, for example, in a manner that allows the user to refer to H. The information processing device 100 outputs H, for example, to a functional unit that performs the annealing calculation. This allows the information processing device 100 to make a quadratic polynomial equivalent to H available, which allows to perform the annealing calculation efficiently.

Here, in the above approach 2, since the number of times the degree reduction is applied is ten, when H is converted into a quadratic polynomial, the number of variables contained in the quadratic polynomial equivalent to original H will increase by ten compared with the number of variables contained in original H. Furthermore, in the above approach 1, since the number of times the degree reduction is applied is ten or more, when H is converted into a quadratic polynomial, the number of variables contained in the quadratic polynomial equivalent to original H will increase by ten or more compared with the number of variables contained in original H.

On the other hand, in the above approach 3, since the number of times the degree reduction is applied is eight, when H is converted into a quadratic polynomial, the number of variables contained in the quadratic polynomial equivalent to original H will increase by eight compared with the number of variables contained in original H. This means that the approach 3 may generate a quadratic polynomial that is more suitable for the annealing calculation than in the case of the approaches 1 and 2.

It is conceivable that the efficiency of the annealing calculation will be enhanced twice at the maximum each time the number of variables contained in the quadratic polynomial is lessened by one. Accordingly, the information processing device 100 may allow to efficiently perform the annealing calculation by achieving a decrease in the number of variables contained in the quadratic polynomial. Next, description of FIG. 7 will be made.

In FIG. 7, (7-1) the information processing device 100 applies a degree reduction to $x_1x_3$ in f to replace $x_1x_3$ with xg and also adds a penalty term $X_{1,3}P(x_1, x_3, x_9)$ to H.

(7-2) The information processing device 100 applies a degree reduction to $x_2x_5$ in f to replace $x_2x_5$ with $x_{10}$ and also adds a penalty term $X_{2,5}P(x_2, x_5, x_{10})$ to H. Here, f has become $x_2x_9(1 + x_4) + x_7x_9 + x_1x_{10}(1 + x_6) + x_8x_{10}$.

(7-3) The information processing device 100 applies a degree reduction to $x_2x_9$ in f to replace $x_2x_9$ with $x_{11}$ and also adds a penalty term $X_{2,9}P(x_2, x_9, x_{11})$ to H.

(7-4) The information processing device 100 applies a degree reduction to $x_1x_{10}$ in f to replace $x_1x_{10}$ with $x_{12}$ and also adds a penalty term $X_{1,10}P(x_1, x_{10}, x_{12})$ to H. Here, f has become $x_{11} + x_4x_{11} + x_7x_9 + x_{12} + x_6x_{12} + x_8x_{10}$.

(7-5) The information processing device 100 applies a degree reduction to $x_4x_{11}$ in f to replace $x_4x_{11}$ with $x_{13}$ and also adds a penalty term $X_{4,11}P(x_4, x_{11}, x_{13})$ to H.

(7-6) The information processing device 100 applies a degree reduction to $x_7x_9$ in f to replace $x_7x_9$ with $x_{14}$ and also adds a penalty term $X_{7,9}P(x_7, x_9, x_{14})$ to H.

(7-7) The information processing device 100 applies a degree reduction to $x_6x_{12}$ in f to replace $x_6x_{12}$ with $x_{15}$ and also adds a penalty term $X_{6,12}P(x_6, x_{12}, x_{15})$ to H.

(7-8) The information processing device 100 applies a degree reduction to $x_8x_{10}$ in f to replace $x_8x_{10}$ with $x_{16}$ and also adds a penalty term $X_{8,10}P(x_8, x_{10}, x_{16})$ to H. Here, f has become a first-degree polynomial $x_{11} + x_{13} + x_{14} + x_{12} + x_{15} + x_{16}$. Therefore, $f^2 = fg$ is put into a format suitable for the annealing calculation because $f^2 = fg$ is a quadratic polynomial and does not become a high-degree polynomial of a cubic or higher degree. Furthermore, the number of variables of f has increased by eight compared with the original state because the degree reduction has been applied eight times.

(Second Action Example of Information Processing Device 100)

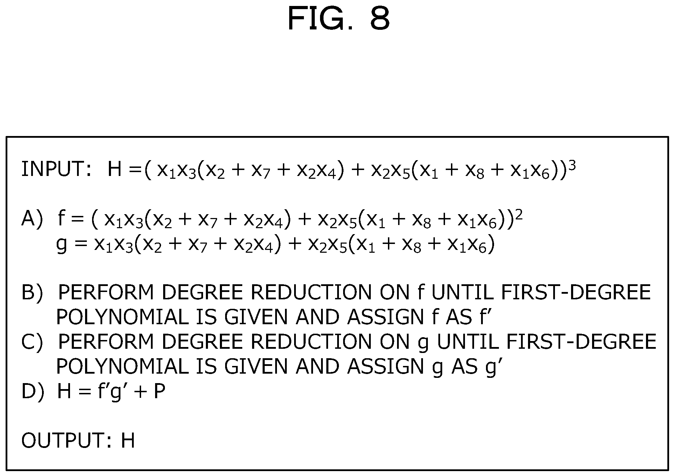

Next, a second action example of the information processing device 100 will be described with reference to FIG. 8. The second action example is an action example indicating how the information processing device 100 converts the Hamiltonian H into a quadratic polynomial by the above approach 3 when the Hamiltonian H is represented by the cube of a certain high-degree polynomial.

FIG. 8 is an explanatory diagram illustrating a second action example of the information processing device 100. In FIG. 8, the information processing device 100 accepts the input of $H = (x_1x_3(x_2 + x_7 + x_2x_4) + x_2x_5(x_1 + x_8 + x_1x_6))^3$.

(8-A) The information processing device 100 extracts unarranged parts f and g of H. The information processing device 100 extracts, for example,

$$f = (x_1x_3(x_2 + x_7 + x_2x_4) + x_2x_5(x_1 + x_8 + x_1x_6))^2 \text{ and } g = x_1x_3(x_2 + x_7 + x_2x_4) + x_2x_5(x_1 + x_8 + x_1x_6).$$

(8-B) If f is a high-degree polynomial, the information processing device 100 applies a degree reduction one or more times to f to generate a first-degree polynomial f'. The information processing device 100 generates the first-degree polynomial f' by, for example, expanding f and then applying a degree reduction one or more times. For example, the information processing device 100 may generate the first-degree polynomial f' by converting f into a quadratic polynomial and then additionally applying a degree reduction one or more times to the converted quadratic polynomial, as in FIG. 6.

The information processing device 100 adds a penalty term produced by the degree reduction to H. At this time, when applying the degree reduction to f using a certain variable, the information processing device 100 applies the degree reduction also to g using the same variable if the degree reduction can be applied to g using the same variable similarly to f.

(8-C) If g is a high-degree polynomial, the information processing device 100 applies a degree reduction one or more times to g to generate a first-degree polynomial g'.

(8-D) The information processing device 100 converts H into a quadratic polynomial by replacing f and g in H with f' and g'. The information processing device 100 generates, for example, H = f'g' + P. P is a symbol indicating a penalty term.

The information processing device 100 outputs H. The information processing device 100 outputs H, for example, in a manner that allows the user to refer to H. The information processing device 100 outputs H, for example, to a functional unit that performs the annealing calculation. This allows the information processing device 100 to make a quadratic polynomial available, which allows to perform the annealing calculation efficiently.

(Usage Example of Information Processing Device 100)

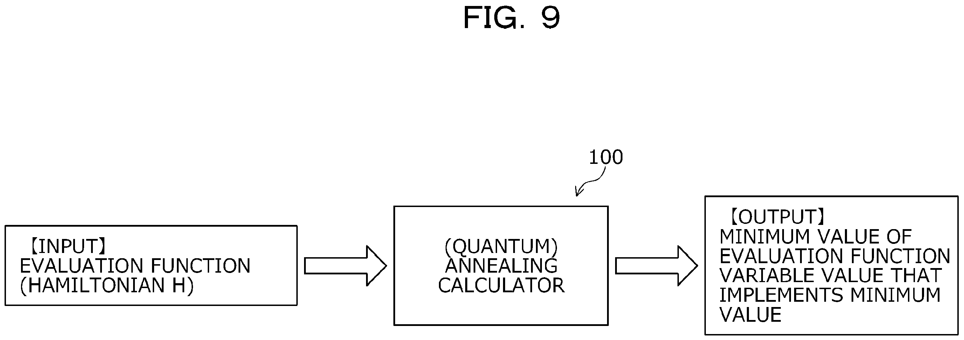

Next, a usage example of the information processing device 100 will be described with reference to FIG. 9.

FIG. 9 is an explanatory diagram illustrating a usage example of the information processing device 100. In FIG. 9, the information processing device 100 has a function as a quantum annealing calculator. The information processing device 100 converts an evaluation function as an input into a quadratic polynomial and performs a quantum annealing calculation, thereby specifying a minimum value of the evaluation function and specifying a variable value of the evaluation function that implements the minimum value. The information processing device 100 outputs the specified minimum value and the variable value of the evaluation function that implements the specified minimum value in a manner that allows the user to refer to the output minimum value and variable value.

(Overall Processing Procedure)

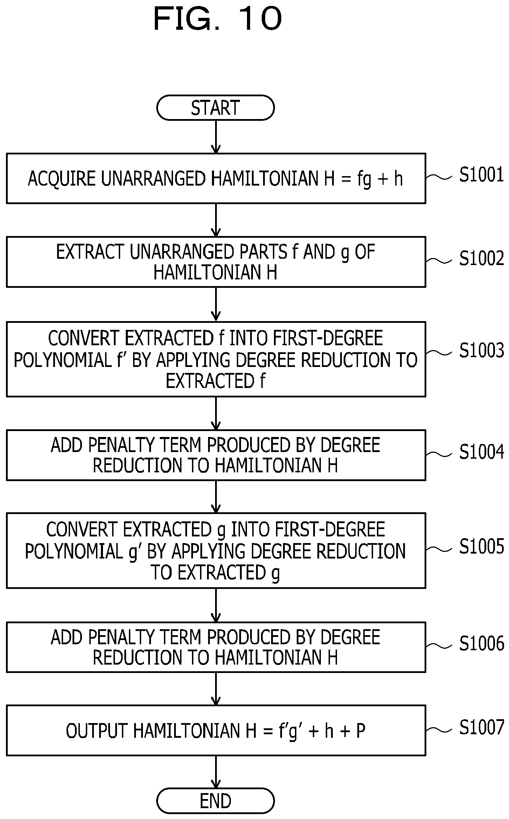

Next, an example of an overall processing procedure executed by the information processing device 100 will be described with reference to FIG. 10. The overall processing is implemented by, for example, the CPU 301, the storage area of the memory 302, the recording medium 305, or the like, and the network I/F 303 illustrated in FIG. 3.

FIG. 10 is a flowchart illustrating an example of an overall processing procedure. In FIG. 10, the information processing device 100 acquires an unarranged Hamiltonian H = fg + h (step S1001). Here, elements f, g, and h denote polynomials. Either the element f or g denotes a high-degree polynomial. The element h denotes a quadratic or lower-degree polynomial. Then, the information processing device 100 extracts unarranged parts f and g of the Hamiltonian H (step S1002).

Next, the information processing device 100 converts extracted f into a first-degree polynomial f' by applying a degree reduction to extracted f (step S1003). Then, the information processing device 100 adds a penalty term produced by the degree reduction to the Hamiltonian H (step S1004).

Next, the information processing device 100 converts extracted g into a first-degree polynomial g' by applying a degree reduction to extracted g (step S1005). Then, the information processing device 100 adds a penalty term produced by the degree reduction to the Hamiltonian H (step S1006).

Next, the information processing device 100 outputs the Hamiltonian H = f'g'+ h + P (step S1007). P denotes a penalty term. Then, the information processing device 100 ends the overall processing. This allows the information processing device 100 to convert the Hamiltonian H into a quadratic polynomial such that the annealing calculation can be performed efficiently.

Here, the information processing device 100 may exchange some steps in the processing order in FIG. 10 to execute. For example, the places of the processing in steps S1003 and S1004 and the places of the processing in steps S1005 and S1006 can be exchanged in the order. Furthermore, the information processing device 100 may omit the processing in some steps in FIG. 10. For example, if f = g holds, the processing in steps S1005 and S1006 can be omitted.

As described above, according to the information processing device 100, an evaluation function represented by the product of high-degree polynomials may be acquired. According to the information processing device 100, a quadratic polynomial equivalent to the evaluation function may be generated by applying a degree reduction one or more times to each of the high-degree polynomials representing the acquired evaluation function without expanding the evaluation function. According to the information processing device 100, the annealing calculation may be performed on the generated quadratic polynomial. This allows the information processing device 100 to make it easier to perform the annealing calculation efficiently.

According to the information processing device 100, a first number of times the degree reduction is applied when the degree reduction is applied one or more times without expanding the evaluation function to generate a quadratic polynomial equivalent to the evaluation function may be specified. According to the information processing device 100, a second number of times the degree reduction is applied when the degree reduction is applied one or more times after expanding the evaluation function to generate a quadratic polynomial equivalent to the evaluation function may be specified. According to the information processing device 100, the first number of times and the second number of times may be compared. According to the information processing device 100, as a result of the comparison, if the first number of times is equal to or less than the second number of times, a quadratic polynomial equivalent to the evaluation function may be generated by applying a degree reduction one or more times to each of the high-degree polynomials representing the evaluation function without expanding the evaluation function. This allows the information processing device 100 to generate a quadratic polynomial equivalent to the evaluation function by an appropriate approach based on the first number of times and the second number of times such that the number of variables contained in the quadratic polynomial to be generated becomes relatively small.

According to the information processing device 100, as a result of the comparison, if the first number of times is greater than the second number of times, a quadratic polynomial equivalent to the evaluation function may be generated by applying a degree reduction one or more times after expanding the evaluation function. This allows the information processing device 100 to generate a quadratic polynomial equivalent to the evaluation function by an appropriate approach based on the first number of times and the second number of times such that the number of variables contained in the quadratic polynomial to be generated becomes relatively small.

According to the information processing device 100, an evaluation function represented by the product of the first high-degree polynomial and the second high-degree polynomial may be acquired. According to the information processing device 100, a first-degree polynomial may be generated by applying a degree reduction one or more times to the first high-degree polynomial without expanding the evaluation function. According to the information processing device 100, a first-degree polynomial may be generated by applying a degree reduction one or more times to the second high-degree polynomial without expanding the evaluation function. According to the information processing device 100, the product of the generated first-degree polynomials may be used to generate a quadratic polynomial equivalent to the evaluation function. This allows the information processing device 100 to efficiently generate a quadratic polynomial equivalent to an evaluation function represented by the product of the first high-degree polynomial and the second high-degree polynomial.

According to the information processing device 100, an evaluation function represented by a product of the first high-degree polynomial and a second high-degree polynomial may be acquired. According to the information processing device 100, the same variable may be used to apply a degree reduction to a part common to the first high-degree polynomial and the second high-degree polynomial. This allows the information processing device 100 to generate a quadratic polynomial equivalent to the evaluation function such that the number of variables contained in the quadratic polynomial to be generated further becomes smaller. Therefore, the information processing device 100 may make it possible to perform the annealing calculation more efficiently.

According to the information processing device 100, an evaluation function represented by the product of a first-degree polynomial and a high-degree polynomial may be acquired. This allows the information processing device 100 to be applied when the annealing calculation is performed on an evaluation function represented by the product of the first-degree polynomial and the high-degree polynomial.

According to the information processing device 100, the evaluation function that is a Hamiltonian may be acquired. This allows the information processing device 100 to be applied when the annealing calculation is performed on an evaluation function that represents energy in a certain system.

Note that the information processing method described in the present embodiment may be implemented by executing a prepared program on a computer such as a PC or a workstation. The information processing program described in the present embodiment is executed by being recorded on a computer-readable recording medium and being read from the recording medium by the computer. The recording medium is a hard disk, a flexible disk, a compact disc (CD)-ROM, a magneto-optical disc (MO), a digital versatile disc (DVD), or the like. Furthermore, the information processing program described in the present embodiment may be distributed via a network such as the Internet.

**Claims**

1. An information processing program comprising instructions which, when the program is executed by a computer, cause the computer to perform processing, the processing comprising:

acquiring an evaluation function represented by a product of high-degree polynomials;

generating a quadratic polynomial equivalent to the evaluation function by applying a degree reduction one or more times to each of the high-degree polynomials that represent the acquired evaluation function without expanding the evaluation function; and

performing annealing calculation on the generated quadratic polynomial.

2. The information processing program according to claim 1, the processing further comprising:

comparing a first number of times the degree reduction is applied when the degree reduction is applied one or more times without expanding the evaluation function to generate the quadratic polynomial equivalent to the evaluation function, and a second number of times the degree reduction is applied when the degree reduction is applied one or more times after expanding the evaluation function to generate the quadratic polynomial equivalent to the evaluation function, wherein

the generating includes

generating the quadratic polynomial equivalent to the evaluation function by applying the degree reduction one or more times to each of the high-degree polynomials that represent the evaluation function without expanding the evaluation function when the first number of times is equal to or less than the second number of times as a result of the comparison.

3. The information processing program according to claim 1 or 2, wherein the evaluation function is represented by the product of a first high-degree polynomial and a second high-degree polynomial, and

the generating includes

generating the quadratic polynomial equivalent to the evaluation function using the product of a first-degree polynomial obtained by applying the degree reduction one or more times to the first high-degree polynomial without expanding the evaluation function and a first-degree polynomial obtained by applying the degree reduction one or more times to the second high-degree polynomial.

4. A computer-implemented method comprising:

acquiring an evaluation function represented by a product of high-degree polynomials;

generating a quadratic polynomial equivalent to the evaluation function by applying a degree reduction one or more times to each of the high-degree polynomials that represent the acquired evaluation function without expanding the evaluation function; and

performing annealing calculation on the generated quadratic polynomial.

5. An information processing device comprising a control unit that:

acquires an evaluation function represented by a product of high-degree polynomials;

generates a quadratic polynomial equivalent to the evaluation function by applying a degree reduction one or more times to each of the high-degree polynomials that represent the acquired evaluation function without expanding the evaluation function; and

performs annealing calculation on the generated quadratic polynomial.

# FIG. 1

EVALUATION FUNCTION = (HIGH-DEGREE POLYNOMIAL) × (HIGH-DEGREE POLYNOMIAL)

↓ DEGREE REDUCTION          ↓ DEGREE REDUCTION          ↓ EXPANSION

EVALUATION FUNCTION = (FIRST-DEGREE POLYNOMIAL) × (FIRST-DEGREE POLYNOMIAL)

EVALUATION FUNCTION = HIGH-DEGREE POLYNOMIAL ✕

↓

ANNEALING CALCULATION

EP 4 030 357 A1

# FIG. 2

# FIG. 3

# FIG. 4

400
STORAGE
UNIT

100

401
ACQUISITION
UNIT

402
GENERATION
UNIT

403
ANALYSIS
UNIT

404
OUTPUT
UNIT

# FIG. 5

100

INPUT: UNARRANGED HAMILTONIAN H

INFORMATION PROCESSING DEVICE

| 1. SPECIFY NUMBER OF TIMES DEGREE REDUCTION IS APPLIED WHEN APPROACHES 1 OR 2 IS APPLIED AFTER ARRANGING HAMILTONIAN H | 2. SPECIFY NUMBER OF TIMES DEGREE REDUCTION IS APPLIED WHEN DEGREE REDUCTION IS APPLIED TO UNARRANGED HAMILTONIAN H AS IT IS |

3. CONVERT HAMILTONIAN H INTO QUADRATIC POLYNOMIAL BY APPROACH THAT MINIMIZES NUMBER OF TIMES DEGREE REDUCTION IS APPLIED

OUTPUT: HAMILTONIAN H CONVERTED INTO QUADRATIC POLYNOMIAL

EP 4 030 357 A1

# FIG. 6

INPUT:  $H = (x_1 x_3 (x_2 + x_7 + x_2 x_4) + x_2 x_5 (x_1 + x_8 + x_1 x_6))^2$

A)  $f = g = x_1 x_3 (x_2 + x_7 + x_2 x_4) + x_2 x_5 (x_1 + x_8 + x_1 x_6)$

B)  · $f' = x_{11} + x_{13} + x_{14} + x_{12} + x_{15} + x_{16}$

   · $H \leftarrow H + X_{1,3} P(x_1, x_3, x_9) + \cdots + X_{8,10} P(x_8, x_{10}, x_{16})$

   · $g = x_{11} + x_{13} + x_{14} + x_{12} + x_{15} + x_{16}$

C)  · $g' = g$ (FIRST-DEGREE POLYNOMIAL IS GIVEN
            AT TIME POINT OF B)

D)  $H = f'g' + X_{1,3} P(x_1, x_3, x_9) + \cdots + X_{8,10} P(x_8, x_{10}, x_{16})$
   ($X_{i,j}$ DENOTES SUFFICIENTLY GREAT INTEGER VALUE.
      FOR EXAMPLE, $X_{i,j}$ IS ALL 100.)

OUTPUT: H

REFER TO FIG. 7
1 : $x_1 x_3 = x_9$
2 : $x_2 x_5 = x_{10}$
3 : $x_2 x_9 = x_{11}$
4 : $x_1 x_{10} = x_{12}$
5 : $x_4 x_{11} = x_{13}$
6 : $x_7 x_9 = x_{14}$
7 : $x_6 x_{12} = x_{15}$
8 : $x_8 x_{10} = x_{16}$

PENALTY TERM PRODUCED AT TIME OF
EACH DEGREE REDUCTION
$P(x,y,z) = xy - 2xz - 2yz + 3z$
(EIGHT PENALTY TERMS ARE PRODUCED
AT THIS TIME)

# FIG. 7

$$f = g = x_1 x_3 (x_2 + x_7 + x_2 x_4) + x_2 x_5 (x_1 + x_8 + x_1 x_6)$$

$1 : x_1 x_3 = x_9$
$2 : x_2 x_5 = x_{10}$

$$x_2 x_9 (1 + x_4) + x_7 x_9 + x_1 x_{10} (1 + x_6) + x_8 x_{10}$$

$3 : x_2 x_9 = x_{11}$
$4 : x_1 x_{10} = x_{12}$

$$x_{11} + x_4 x_{11} + x_7 x_9 + x_{12} + x_6 x_{12} + x_8 x_{10}$$

$5 : x_4 x_{11} = x_{13}$
$6 : x_7 x_9 = x_{14}$
$7 : x_6 x_{12} = x_{15}$
$8 : x_8 x_{10} = x_{16}$

ALL FIRST-DEGREE POLYNOMIALS ARE GIVEN WITH
EIGHT DEGREE REDUCTIONS (QUADRATIC POLYNOMIAL
IS GIVEN EVEN WHEN SQUARED)

# FIG. 8

INPUT: $H = (x_1 x_3 (x_2 + x_7 + x_2 x_4) + x_2 x_5 (x_1 + x_8 + x_1 x_6))^3$

A) $f = (x_1 x_3 (x_2 + x_7 + x_2 x_4) + x_2 x_5 (x_1 + x_8 + x_1 x_6))^2$
$g = x_1 x_3 (x_2 + x_7 + x_2 x_4) + x_2 x_5 (x_1 + x_8 + x_1 x_6)$

B) PERFORM DEGREE REDUCTION ON f UNTIL FIRST-DEGREE POLYNOMIAL IS GIVEN AND ASSIGN f AS f′

C) PERFORM DEGREE REDUCTION ON g UNTIL FIRST-DEGREE POLYNOMIAL IS GIVEN AND ASSIGN g AS g′

D) $H = f'g' + P$

OUTPUT: H

FIG. 9

[INPUT]
EVALUATION FUNCTION
(HAMILTONIAN H)

(QUANTUM)
ANNEALING
CALCULATOR

100

[OUTPUT]
MINIMUM VALUE OF
EVALUATION FUNCTION
VARIABLE VALUE THAT
IMPLEMENTS MINIMUM
VALUE

# FIG. 10

START

ACQUIRE UNARRANGED HAMILTONIAN H = fg + h ～ S1001

EXTRACT UNARRANGED PARTS f AND g OF HAMILTONIAN H ～ S1002

CONVERT EXTRACTED f INTO FIRST-DEGREE POLYNOMIAL f' BY APPLYING DEGREE REDUCTION TO EXTRACTED f ～ S1003

ADD PENALTY TERM PRODUCED BY DEGREE REDUCTION TO HAMILTONIAN H ～ S1004

CONVERT EXTRACTED g INTO FIRST-DEGREE POLYNOMIAL g' BY APPLYING DEGREE REDUCTION TO EXTRACTED g ～ S1005

ADD PENALTY TERM PRODUCED BY DEGREE REDUCTION TO HAMILTONIAN H ～ S1006

OUTPUT HAMILTONIAN H = f'g' + h + P ～ S1007

END

Europäisches
Patentamt

European
Patent Office

Office européen
des brevets

# EUROPEAN SEARCH REPORT

Application Number

EP 21 20 8180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2017/344898 A1 (KARIMI SAHAR [CA] ET AL) 30 November 2017 (2017-11-30) * paragraphs [0012], [0069] – [0071], [0126] – [0127]; claims 8, 9, 11; figure 1 * ----- | 1-5 | INV. G06N10/60 G06F17/10 |
| X | NIKE DATTANI: "Quadratization in discrete optimization and quantum mechanics", ARXIV.ORG, CORNELL UNIVERSITY LIBRARY, 201 OLIN LIBRARY CORNELL UNIVERSITY ITHACA, NY 14853, 14 January 2019 (2019-01-14), XP081493374, * the whole document * ----- | 1-5 | |

TECHNICAL FIELDS
SEARCHED (IPC)

G06N
G06F

The present search report has been drawn up for all claims

| Place of search | Date of completion of the search | Examiner |
|---|---|---|
| Munich | 14 April 2022 | Winkelbauer, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .............................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 21 20 8180**

This annex lists the patent family members relating to the patent documents cited in the above-mentioned European search report.
The members are as contained in the European Patent Office EDP file on
The European Patent Office is in no way liable for these particulars which are merely given for the purpose of information.

**14-04-2022**

| Patent document cited in search report | Publication date | Patent family member(s) | | Publication date |
|---|---|---|---|---|
| US 2017344898 A1 | 30-11-2017 | CA | 3024199 A1 | 30-11-2017 |
| | | CN | 109478256 A | 15-03-2019 |
| | | GB | 2566190 A | 06-03-2019 |
| | | JP | 6937085 B2 | 22-09-2021 |
| | | JP | 2019526090 A | 12-09-2019 |
| | | US | 2017344898 A1 | 30-11-2017 |
| | | WO | 2017201626 A1 | 30-11-2017 |

EPO FORM P0459

For more details about this annex : see Official Journal of the European Patent Office, No. 12/82

**EP 4 030 357 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019526090 A
- JP 2012027755 A
- JP 2000298665 A
- US 20170344898